# EUROPEAN PATENT APPLICATION

(11) **EP 1 804 447 A1**
(43) Date of publication of application: **04.07.2007**
(21) Application number: 05778541.2
(22) Date of filing: 08.09.2005
(51) Int. Cl.: H04L 12/66, H04L 12/56, G06F 13/00

(54) **PROTECT DEVICE, PROTECT METHOD, PROTECT PROGRAM, AND NETWORK ATTACK PROTECT SYSTEM**

(30) Priority: 21.10.2004 JP 2004306533
(71) Applicant: NIPPON TELEGRAPH AND TELEPHONE CORPORATION, Tokyo 100-8116 (JP)
(72) Inventor: KURAKAMI, Hiroshi c/o NTT Intellectual, Musashino-shi, Tokyo 180-8585 (JP); SEBAYASHI, Katsuhiro c/o NTT Intellectual, Musashino-shi, Tokyo 180-8585 (JP); SATAKE, Yasuhiro c/o NTT Intellectual Property, Musashino-shi, Tokyo 180-8585 (JP)
(74) Representative: HOFFMANN EITLE
(86) International application number: PCT/JP2005/016554
(87) International publication number: WO 2006/043371

(57) **Abstract**

Upon reception of attack information from a detector 50, when an attacked server 20-1 is specified from the attack information, a defense device 10 determines a repeater 30-1 as the next relay destination with respect to the specified server 20-1 from a routing table, and selects a repeater 30-2 as a notification destination, excluding the repeater 30-1 from the repeaters 30-1 and 30-2 adjacent to the defense device 10. The defense device 10 then notifies the selected repeater 30-2 of the route information for routing the malicious packet through the own device, to control the passage of the malicious packet routed to the own device from the repeater 30-2 having changed the routing table based on the notified route information.

## Description

### TECHNICAL FIELD

The present invention relates to a defense device, a defense method, a defense program, and a network-attack defense system for transmitting route information to a repeater that relays a malicious packet addressed to a server or a domain on a network, to control the passage of the malicious packet.

### BACKGROUND ART

Conventionally, network-attack defense systems that include a defense device that defends a server on a network, which undergoes a Denial of Service (DoS) attack or a Distributed Denial of Service (DDoS) attack, and a plurality of routers that relay a packet transmitted to the server, are known. For example, in a network-attack defense system disclosed in Patent document 1 (US Patent Application Publication No. 2002/0083175 Specification), when an attack against a server is detected, a defense device notifies a predetermined router of route information for routing packets through own device, thereby filtering the packets routed through the own device, and transferring the filtered packets to the server.

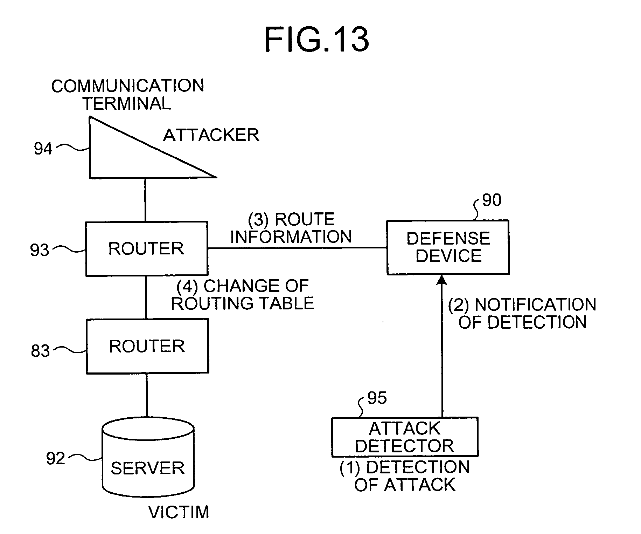

This processing is specifically explained with reference to Fig. 13. Fig. 13 is an explanatory diagram of a network-attack defense system according to the conventional art. As shown in Fig. 13, for example, if a communication terminal (attacker) 94 is attacking a server 92 (victim), when an attack detector 95 detects that the server 92 that receives packets via a router 83 is under attack, the attack detector 95 notifies a defense device 90 that an attack has been detected (see (1) and (2) in Fig. 13). Upon reception of the notice, the defense device 90 notifies a predetermined router 93 of route information for routing the packets through the own device (see (3) in Fig. 13). On the other hand, the router 93 updates a routing table based on the received route information, and relays the packets according to the updated routing table (see (4) in Fig. 13). That is, the router 93 transfers the malicious packet addressed to the server 92 to the defense device 90. As a result, the defense device 90 filters the malicious packet transferred from the router 93, and transfers the filtered packet to the server 92 via the router 83.

Patent Document 1: US Patent Application Publication No. 2002/0083175 Specification (pages 10 to 12)

### DISCLOSURE OF INVENTION

### PROBLEM TO BE SOLVED BY THE INVENTION

However, in the conventional art, for example, as in the example shown in Fig. 13, it is predetermined that the defense device 90 notifies the router 93 of the route information only when an attack against the server 92 that receives packets via the router 83 is detected. Therefore, if the server 92 becomes an attacker, the malicious packet cannot be prevented. In other words, in the network-attack defense system according to the conventional art, if the inflow direction of the malicious packet is not fixed, the attack cannot be prevented.

In the network-attack defense system according to the conventional art, when the packet filtered by the defense device 90 is transferred to the router 93, a packet loop is generated between the defense device 90 and the router 93. In the conventional art, further, when the network-attack defense system includes a plurality of defense devices 90, since it is predetermined that the route information is notified to the router 93, the passage of the malicious packet cannot be controlled by making the malicious packet detour through the defense device closest to the sender of the malicious packet. Further, the malicious packet cannot be made to detour through only the defense device closest to the sender of the malicious packet.

The present invention has been achieved to solve the above problems. It is an object of the present invention to provide a defense device, a defense method, a defense program, and a network-attack defense system, that can prevent a malicious packet without being affected by an inflow direction of the malicious packet.

### MEANS FOR SOLVING PROBLEM

A defense device according to claim 1 controls, based on information on an attack against a server or a domain, a passage of a malicious packet addressed to the server or the domain on a network by transmitting route information to a repeater that relays the malicious packet. The defense device includes a repeater selecting unit that selects at least one repeater that becomes a notification destination of the route information for routing the malicious packet through the defense device, from among a plurality of repeaters adjacent to the defense device, based on the information on the attack; a route-information notifying unit that notifies the route information for routing the malicious packet through the defense device to the repeater by the repeater selecting unit; and a packet control unit that controls the passage of the malicious packet routed to the defense device from the repeater to which the route information has been notified by the route-information notifying unit.

In the defense device according to claim 2, the repeater selecting unit selects the repeater as the notification destination of the route information, excluding the repeater that becomes a next relay destination with respect to the server or the domain attacked by the malicious packet, from among the repeaters adjacent to the defense device.

The defense device according to claim 3 further includes an attack information transmitter that transmits the information on the attack to other defense device adjacent to the defense device. The repeater selecting unit also selects, when the information on the attack is received from the other defense device, at least one repeater that becomes the notification destination of the route information for routing the malicious packet through the defense device, based on the information on the attack.

The defense device according to claim 4 further includes an attack-termination determining unit that monitors the malicious packet routed to the defense device from the repeater to which the route information has been notified by the route-information notifying unit, and determines whether a transmission of the malicious packet routed from the repeater to the defense device has terminated. When the attack-termination determining unit determines that the transmission of the malicious packet has terminated, the route-information notifying unit notifies route information for not routing the malicious packet through the defense device to the repeater.

A network-attack defense system according to claim 5 includes a plurality of repeaters that relays a packet transmitted to a server or a domain on a network; and a defense device that controls, based on information on an attack against the server or the domain, a passage of a malicious packet addressed to the server or the domain on a network by transmitting route information to a repeater that relays the malicious packet. The defense device includes a repeater selecting unit that selects at least one repeater that becomes a notification destination of the route information for routing the malicious packet through the defense device, from among a plurality of repeaters adjacent to the defense device, based on the information on the attack; a route-information notifying unit that notifies the route information for routing the malicious packet through the defense device to the repeater by the repeater selecting unit; and a packet control unit that controls the passage of the malicious packet routed to the defense device from the repeater to which the route information has been notified by the route-information notifying unit.

A defense method according to claim 6 uses a defense device that controls, based on information on an attack against a server or a domain, a passage of a malicious packet addressed to the server or the domain on a network by transmitting route information to a repeater that relays the malicious packet. The defense method includes selecting at least one repeater that becomes a notification destination of the route information for routing the malicious packet through the defense device, from among a plurality of repeaters adjacent to the defense device, based on the information on the attack; notifying the route information for routing the malicious packet through the defense device to the repeater at the selecting; and controlling the passage of the malicious packet routed to the defense device from the repeater to which the route information has been notified at the notifying.

In the defense method according to claim 7, the selecting includes selecting the repeater as the notification destination of the route information, excluding the repeater that becomes a next relay destination with respect to the server or the domain attacked by the malicious packet, from among the repeaters adjacent to the defense device.

The defense method according to claim 8 further includes transmitting the information on the attack to other defense device adjacent to the defense device. The selecting includes also selecting, when the information on the attack is received from the other defense device, at least one repeater that becomes the notification destination of the route information for routing the malicious packet through the defense device, based on the information on the attack.

The defense method according to claim 9 further includes monitoring the malicious packet routed to the defense device from the repeater to which the route information has been notified at the notifying; and determining whether a transmission of the malicious packet routed from the repeater to the defense device has terminated. When it is determined that the transmission of the malicious packet has terminated, the notifying includes notifying route information for not routing the malicious packet through the defense device to the repeater.

A defense program according to claim 10 is for realizing a defense method using a defense device that controls, based on information on an attack against a server or a domain, a passage of a malicious packet addressed to the server or the domain on a network by transmitting route information to a repeater that relays the malicious packet. The defense program causes a computer to execute as the defense device selecting at least one repeater that becomes a notification destination of the route information for routing the malicious packet through the defense device, from among a plurality of repeaters adjacent to the defense device, based on the information on the attack; notifying the route information for routing the malicious packet through the defense device to the repeater at the selecting; and controlling the passage of the malicious packet routed to the defense device from the repeater to which the route information has been notified at the notifying.

In the defense program according to claim 11, the selecting includes selecting the repeater as the notification destination of the route information, excluding the repeater that becomes a next relay destination with respect to the server or the domain attacked by the malicious packet, from among the repeaters adjacent to the defense device.

The defense program according to claim 12 further causes the computer to execute transmitting the information on the attack to other defense device adjacent to the defense device. The selecting includes also selecting, when the information on the attack is received from the other defense device, at least one repeater that becomes the notification destination of the route information for routing the malicious packet through the defense device, based on the information on the attack.

The defense program according to claim 13 further causes the computer to execute monitoring the malicious packet routed to the defense device from the repeater to which the route information has been notified at the notifying; and determining whether a transmission of the malicious packet routed from the repeater to the defense device has terminated. When it is determined that the transmission of the malicious packet has terminated, the notifying includes notifying route information for not routing the malicious packet through the defense device to the repeater.

### EFFECT OF THE INVENTION

According to the invention of claim 1, 5, 6, or 10, the repeater, which becomes the notification destination of the route information for routing the malicious packet through the own device, is selected by taking the inflow direction of the malicious packet into consideration, to control the passage of the malicious packet routed from the selected repeater to the own device. Accordingly, defense against the malicious packet can be realized, without being affected by the inflow direction of the malicious packet.

According to the invention of claim 2, 7, or 11, the route information is notified to another repeater, excluding the repeater as a next relay destination with respect to the attacked server or domain, and the packet routed from the other repeater is relayed to the repeater as the next relay destination with respect to the attacked server or domain. Accordingly, generation of the packet loop can be prevented.

According to the invention of claim 3, 8, or 12, the defense device transmits the attack information to another defense device adjacent to the own device. Further, even when having received the attack information from another defense device, the defense device selects a repeater, which becomes the notification destination of the route information for routing the malicious packet through the own device, based on the attack information, to control the passage of the malicious packet routed from the selected repeater to the own device. Accordingly, the defense against the attack can be realized by the defense device close to the attack source.

According to the invention of claim 4, 9, or 13, when transmission of the malicious packet routed from the repeater to the own device has finished, the route information for not routing the malicious packet through the own device is notified again to the repeater. Accordingly, detour of the malicious packet via the defense device can be efficiently changed over.

### BRIEF DESCRIPTION OF DRAWINGS

Fig. 1 is a configuration diagram of a network-attack defense system according to a first embodiment;
Fig. 2 is a block diagram of a configuration of a defense device according to the first embodiment;
Fig. 3 is an example of a suspicious signature;
Fig. 4 is an example of normal condition information;
Fig. 5 is an example of an illegal traffic detection condition;
Fig. 6 is a flowchart of a process procedure at the time of receiving attack information;
Fig. 7 is a flowchart of a process procedure at the time of detecting an illegal packet;
Fig. 8 is a flowchart of a process procedure at the time of controlling the packet;
Fig. 9 is a configuration diagram of a network-attack defense system according to a second embodiment;
Fig. 10 is a block diagram of a configuration of a defense device according to the second embodiment;
Fig. 11 is a flowchart of a process procedure at the time of receiving the attack information;
Fig. 12 is a flowchart of a process procedure of determining attack termination; and
Fig. 13 is an explanatory diagram of a network-attack defense system according to a conventional art.

### EXPLANATIONS OF LETTERS OR NUMERALS

- 10, 60: Defense device
- 11: Network interface
- 12: Packet controller
- 13, 63: Attack information processor
- 14: Repeater selector
- 15: Route-information notifying unit
- 16: Packet obtaining unit
- 17, 67: Attack detection module
- 20: Server
- 30: Repeater
- 40: Communication terminal
- 50: Detector
- 83: Router
- 95: Attack detector
- 100, 200: Network-attack defense system

### BEST MODE(S) FOR CARRYING OUT THE INVENTION

Exemplary embodiments of a defense device, a defense method, a defense program, and a network-attack defense system according to the present invention will be explained in detail below with reference to the accompanying drawings. A network-attack defense system that prevents an attack by one defense device is explained as a first embodiment, then, a network-attack defense system that prevents an attack by a plurality of defense devices is explained as a second embodiment. Lastly, various kinds of modification examples of the first and the second embodiments will be explained as a third embodiment.

### First Embodiment

According to the first embodiment, the outline and the characteristics of the network-attack defense system that prevents an attack by one defense device are explained first, and followed by the configuration and processing of the defense device, and the effect of the first embodiment.

### [Outline and characteristics of system (first embodiment)]

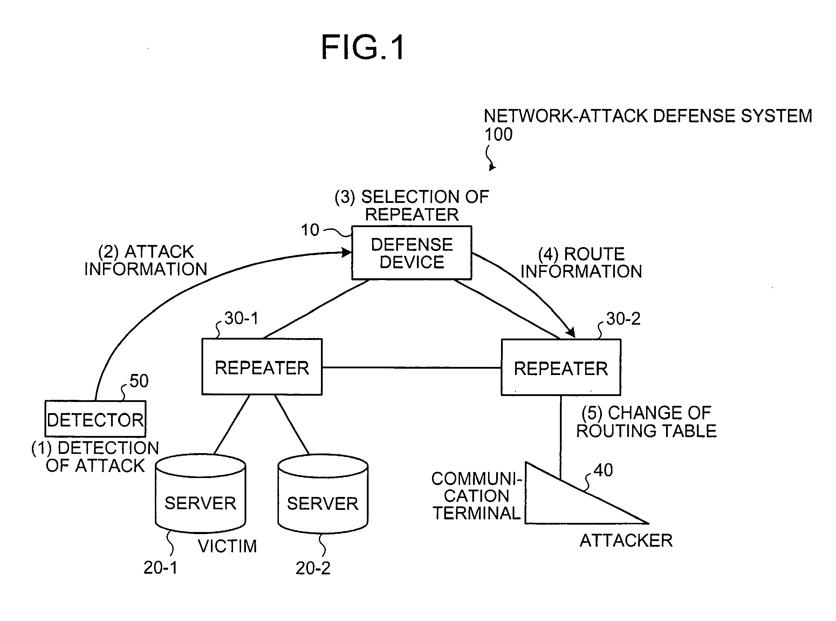

The outline and the characteristics of the network-attack defense system according to the first embodiment are explained with reference to Fig. 1. Fig. 1 is a configuration diagram of the network-attack defense system according to the first embodiment.

As shown in Fig. 1, a network-attack defense system 100 includes a defense device 10 that defends a server 20 on a network against an attack, when a DoS attack or a DDoS attack with respect to the server 20 is detected, and a plurality of repeaters 30 that relay a packet transmitted to the server 20, on the network. The server 20 and a communication terminal 40 are connected to the network, and a detector 50 that detect that the server 20 is under attack is provided on the network.

The repeater 30 can function as, for example, a router or a bridge. The respective repeaters 30 shown in Fig. 1 are distinguished from each other as a repeater 30-1 and a repeater 30-2, and the respective servers 20 are distinguished from each other as a server 20-1 and a server 20-2.

In the network-attack defense system 100, a routing table specifying addresses of packets is registered in the defense device 10 and the repeater 30. As a method for registering the routing table, for example, it can be registered in conformity with a known routing protocol such as Open Shortest Path First (OSPF), Routing Information Protocol (RIP), or Border Gateway Protocol (BGP).

When the communication terminal 40 normally transmits a packet to the server 20-1, the transmitted packet is relayed to the server 20-1 via the repeaters 30-2 and 30-1 without being relayed by the defense device 10 according to the respective routing tables of the repeaters 30-1 and 30-2.

When the communication terminal 40 is an attacker, and a malicious packet for an attack is transmitted to the server 20-1, the detector 50 detects the attack to the server 20-1 and transmits attack information indicating detection of an attack to the defense device 10 (see (1) and (2) in Fig. 1). An address and the like of the attacked server 20-1 are included in the attack information. The detector 50 and the defense device 10 can be connected to a controlling network for controlling the detector 50, the defense device 10, and the like, and the attack information can be transferred via the controlling network.

On the other hand, the defense device 10 having received the attack information transmitted from the detector 50 selects the repeater 30, which is a notification destination of route information for routing the malicious packet through the own device, based on the received attack information (see (3) in Fig. 1). The main characteristic of the network-attack defense system 100 according to the first embodiment is that the repeater is selected by taking an inflow direction of the malicious packet into consideration, thereby enabling defense against the malicious packet, without being affected by.the inflow direction of the malicious packet.

In other words, the defense device 10 specifies the attacked server 20 from the attack information, determines the repeater 30, which becomes the next relay destination with respect to the packet including the address of the attacked server 20, from the routing table, and selects the repeater 30, excluding the repeater 30 as the next relay destination, from the repeaters 30 adjacent to the defense device 10, as the notification destination. For example, in the example shown in Fig. 1, when the attacked server 20-1 is specified from the attack information, the defense device 10 determines the repeater 30-1 as the next relay destination with respect to the specified server 20-1 from the routing table, and selects the repeater 30-2 as the notification destination, excluding the repeater 30-1 from the repeaters 30-1 and 30-2 adjacent to the defense device 10.

After having selected the repeater 30, the defense device 10 notifies the selected repeater 30-2 of the route information for routing the malicious packet through the own device (see (4) in Fig. 1), and the repeater 30-2 changes the routing table based on the notified route information (see (5) in Fig. 1). As a result, the repeater 30-2 relays the malicious packet addressed to the server 20-1 to the defense device 10. That is, the malicious packet is relayed to the server 20-1 via the repeater 30-2, the defense device 10, and the repeater 30-1.

The defense device 10 controls the passage of the malicious packet relayed from the repeater 30-2 based on the attack information, and relays the packet addressed to the server 20-1. If the victim/target is not the server 20, but a certain domain, the malicious packet addressed to the domain is relayed to the defense device 10. When having determined that the attack from the communication terminal 40 has finished by monitoring of the malicious packet, the defense device 10 notifies the repeater 30-2 of the route information for not routing the packet addressed to the server 20-1 through the own device, and the repeater 30-2 having received the route information changes the routing table based on the notified route information.

### [Configuration of defense device (first embodiment)]

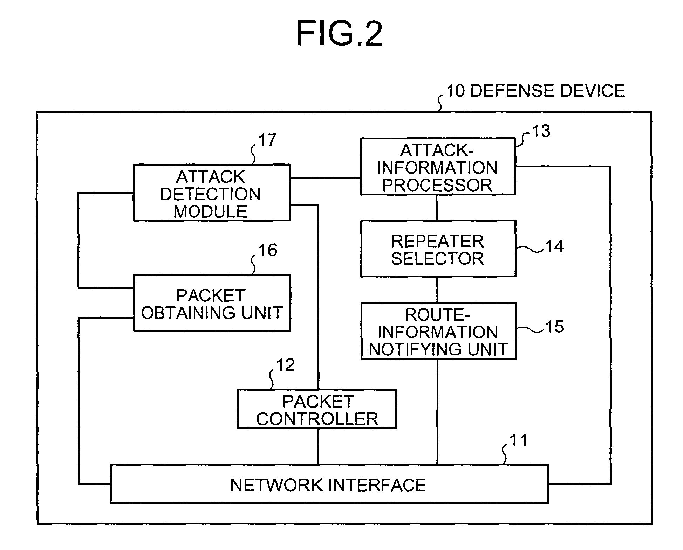

The configuration of the defense device 10 shown in Fig. 1 is explained next. Fig. 2 is a block diagram of the configuration of the defense device 10 according to the first embodiment. As shown in Fig. 2 the defense device 10 includes a network interface 11, a packet controller 12, an attack information processor 13, a repeater selector 14, a route-information notifying unit 15, a packet obtaining unit 16, and an attack detection module 17.

The defense device 10 includes a central processing unit (CPU), a memory, a hard disk, and the like, and the packet controller 12, the attack information processor 13, the repeater selector 14, the route-information notifying unit 15, the packet obtaining unit 16, and the attack detection module 17 can be a program module processed by the CPU. The program module can be processed by one CPU or can be distributed to a plurality of CPUs and processed.

The packet controller 12 corresponds to a "packet control unit" described in claims, the repeater selector 14 corresponds to a "repeater selecting unit", and the route-information notifying unit 15 corresponds to a "route-information notifying unit".

In Fig. 2, the network interface 11 transfers packets, attack information, and the like between various types of communication equipment connected to the network. Specifically, the network interface 11 is formed of a network connection card and the like for connecting to the network such as a local area network (LAN) or a wide area network (WAN).

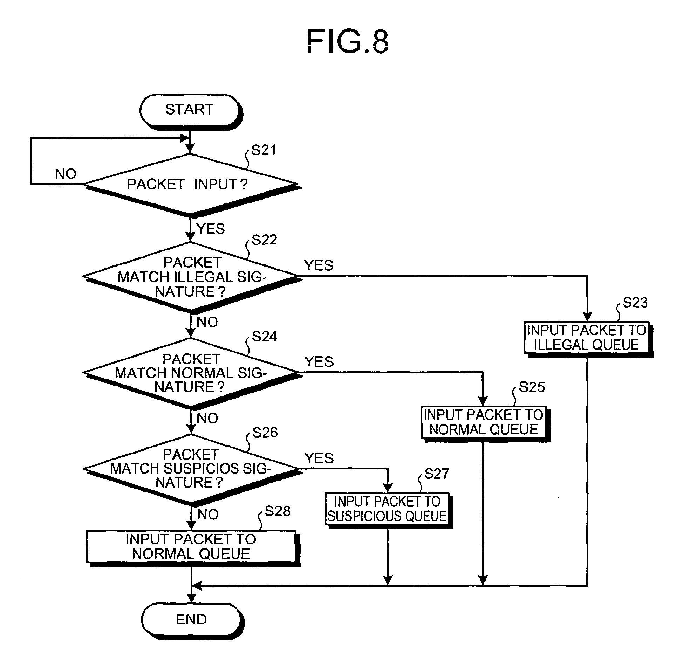

The packet controller 12 has a routing table with respect to the address of the packet registered therein and relays a received packet according to the routing table. The packet controller 12 also has a filtering unit (not shown) that performs packet filtering, and controls the passage of the packet received by the network interface 11 and outputs the packet which is allowed to pass, to the network interface 11. The packet filtering will be explained later in detail with reference to Fig. 8.

When the detector 50 detects a DoS attack or a DDoS attack, the attack information processor 13 receives attack information indicating detection of the attack. A signature and the like for controlling the passage of the packet can be included in the attack information in addition to the address of the attacked server 20. That is, the attack information processor 13 can receive a suspicious signature or normal condition information for restricting suspicious packets with respect to the attack.

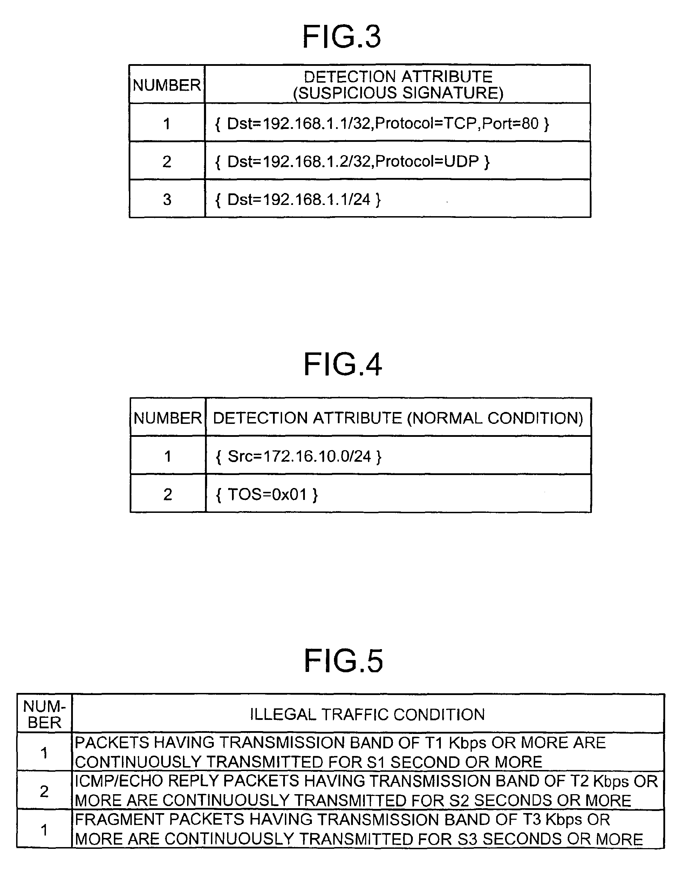

The suspicious signature is explained with reference to Fig. 3. Fig. 3 is an example of the suspicious signature. As shown in Fig. 3, the suspicious signature is formed of information indicating the detection condition of the suspicious packet. Specifically, for example, a suspicious signature No. 1 shown in Fig. 3 is formed of a combination of detection attributes that "destination IP address" is "192.168.1.1/32" (dst=192.168.1.1/32), "Protocol" indicating the type of protocol in an upper layer of IP (TCP or UDP) is "TCP" (protocol=TCP), and "destination port (destination port number)" indicating which application the information on the protocol in the upper layer of the UP belongs is "80" (Port=80).

A suspicious signature No. 2 shown in Fig. 2 is formed of a combination of detection attributes that "destination IP address" is "192.168.1.2/32" (dst=192.168.1.2/32), and "Protocol" is "user datagram protocol (UDP) (protocol=UDP). Likewise, a suspicious signature No. 3 is formed of a combination of detection attributes that "destination IP address" is "192.168.1.0/24". The suspicious signature received by the attack information processor 13 is registered in the filtering unit in the packet controller 12 and used for controlling the passage of the packet.

The normal condition information received by the attack information processor 13, that is, the normal condition information indicating a packet transmitted from a terminal used by a legitimate user is explained with reference to Fig. 4. Fig. 4 is an example of the normal condition information. As shown in Fig. 4, the normal condition information is formed of a plurality of records including a pair of an attribute in an IP packet and an attribute value. The number is used for convenience' sake for specifying the record (pattern).

Specifically, the detection attribute of the record No. 1 specifies that "source IP address" of IP is "172.16.10.0/24" (src=172.16.10.0/24), and the detection attribute of the record No. 2 specifies that "type of service" indicating the quality of service on IP is "01 (in hexadecimal)" (TOS=0x01). For the normal condition, for example, the source IP address of the server 20 and the like as the defense target, such as a branch or an affiliated company of a company operating the server, and the source IP address of the network recognizing that the owner of the LAN in which the server 20 is accommodated is the normal user are set. The attack detection module 17 refers to the normal condition to calculate the AND with the suspicious signature for each of all records of the normal condition, and designates the result as the normal signature.

In Fig. 2, the repeater selector 14 selects at least one repeater 30, which becomes a notification destination of the route information for routing the malicious packet through the own device, from the repeaters 30 on the network based on the attack information received by the attack information processor 13. Specifically, the repeater selector 14 specifies the attacked server 20 from the attack information, determines the repeater 30, which becomes the next relay destination with respect to the packet including the address of the attacked server 20, from the routing table, and selects the repeater 30 excluding the repeater 30 as the next relay destination, from the repeaters 30 adjacent to the defense device 10, as the notification destination.

For example, in the example shown in Fig. 1, when the attacked server 20-1 is specified from the attack information, the repeater selector 14 determines the repeater 30-1 as the next relay destination with respect to the packet addressed to the specified server 20-1 from the routing table, and selects the repeater 30-2 as the notification destination, excluding the repeater 30-1 from the repeaters 30-1 and 30-2 adjacent to the defense device 10. On the other hand, in Fig. 1, when the communication terminal 40 attacked by the server 20-2 is specified, the repeater selector 14 determines the repeater 30-2 as the next relay destination with respect to the packet addressed to the specified communication terminal 40 from the routing table, and selects the repeater 30-1 as the notification destination, excluding the repeater 30-2 from the repeaters 30-1 and 30-2 adjacent to the defense device 10.

The route-information notifying unit 15 notifies the repeater 30 selected by the repeater selector 14 of the route information for routing the packet to be transmitted to a victim/target through the defense device 10. Specifically, in the above example, when the attacked server 20-1 is specified from the attack information, the route-information notifying unit 15 transmits the route information for routing the packet to be transmitted to the server 20-1 through the defense device 10 to the repeater 30-2. The route information includes the IP address of the victim/target, the network address, and the like. For example, the route-information notifying unit 15 can notify the selected repeater 30 of the route information in conformity with the BGP.

The packet obtaining unit 16 obtains the packet received by the network interface 11 and provides statistical information relating to the statistics of the obtained packet to the attack detection module 17 and the like.

The attack detection module 17 detects or analyzes the attack based on the statistical information provided by the packet obtaining unit 16 and the attack information received by the attack information processor 13, and generates a normal signature or an illegal signature.

Generation of the normal signature is explained. When the attack information processor 13 receives the attack information (including the suspicious signature and the normal condition information), the attack detection module 17 refers to the normal condition shown in Fig. 4 to calculate the AND with the suspicious signature for each of all records of the normal condition, and designates the result as the normal signature. The normal signature is used for authorizing the normal packet, which is a communication packet of a normal user, from the suspicious signature. For example, with reference to the examples in Figs. 3 and 4, the suspicious signature of a packet detected by the condition of the record No. 1 in Fig. 3 is [dst=192.168.1.1/32, Protocol=TCP, Port=80], and the normal signature in Fig. 4 is [src=172.16.10.24, dst=192.168.1.1/32, Protocol=TCP, Port=80] and [TOS=0x01, dst=192.168.1.1/32, Protocol=TCP, Port=80].

The attack detection module 17 can detect an illegal traffic, in which case, the attack detection module 17 holds an illegal traffic detection condition for detecting the illegal traffic. The illegal traffic detection condition is explained with reference to Fig. 5. Fig. 5 is an example of the illegal traffic detection condition. As shown in Fig. 5, the illegal traffic condition is formed of a plurality of traffic patterns of known DDos attacks. When the traffic of the suspicious malicious packet matches one of the traffic pattern, the traffic is recognized as an illegal traffic. The number is used for convenience' sake for specifying the record (pattern).

Specifically, the illegal traffic condition of No. 1 indicates a traffic pattern that "packets having a transmission band of T1 kilobyte per second or more are continuously transmitted for S1 second or more". The illegal traffic condition of No. 2 indicates a traffic pattern that "echo reply message packets on the Internet Control Message Protocol (ICMP) having a transmission band of T2 kilobytes per second or more are continuously transmitted for S2 seconds or more". Further, the illegal traffic condition of No. 3 indicates a traffic pattern that "fragment packets indicating that data, included in the packet is divided into a plurality of IP packets and transmitted since the data is too long, having a transmission band of T3 kilobytes per second or more are continuously transmitted for S3 seconds or more".

When having detected a traffic that matches any one pattern of the illegal traffic conditions shown in Fig. 4, the attack detection module 17 generates an illegal signature for restricting the illegal traffic. Specifically, the attack detection module 17 specifies the source IP address of a packet satisfying the detected illegal traffic condition as an illegal address range and generates a condition that is within the illegal address range and matches the suspicious signature, as the illegal signature.

The normal signature and the illegal signature generated by the attack detection module 17 are registered in the filtering unit in the packet controller 12 like the suspicious signature received by the attack information processor 13, and are used for controlling the passage of the packet.

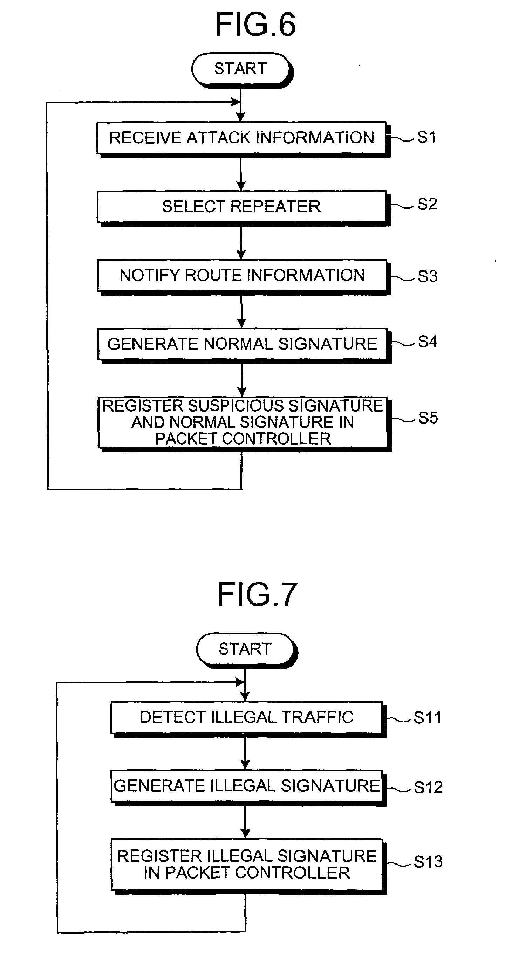

[Processing at the time of receiving attack information (first embodiment)] The operation at the time of receiving the attack information by the defense device 10 is explained with reference to Fig. 6. Fig. 6 is a flowchart of a process procedure at the time of receiving the attack information.

As shown in Fig. 6, when the attack information processor 13 in the defense device 10 receives the attack information transmitted from the detector 50 (step S1), the repeater selector 14 selects at least one repeater 30 as the notification destination of the route information for routing the malicious packet through the own device, based on the received attack information (step S2).

Specifically, in the example shown in Fig. 1, the repeater selector 14 specifies the attacked server 20-1 based on the attack information, determines the repeater 30-1 as the next relay destination with respect to the packet addressed to the specified server 20-1 from the routing table, and selects the repeater 30-2 as the notification destination, excluding the repeater 30-1 from the repeaters 30-1 and 30-2 adjacent to the defense device 10.

Thereafter, the route-information notifying unit 15 in the defense device 10 notifies the repeater 30 selected by the repeater selector 14 at step S2 of the route information for routing the packet to be transmitted to the victim/target through the defense device 10 (step S3). Specifically, in this example, the route-information notifying unit 15 transmits the route information for routing the packet to be transmitted to the server 20-1 through the defense device 10, to the repeater 30-2.

The attack detection module 17 then generates the normal signature based on the suspicious signature and the normal condition information included in the attack information (step S4), and registers the suspicious signature included in the attack information and the normal signature generated at step S4 in the packet controller 12 (filtering unit) (step S5).

The repeater 30-2 having received the route information according to the processing at step S3 changes the routing table based on the notified route information, thereby relaying the malicious packet addressed to the server 20-1 to the defense device 10. The defense device 10 relays the packet addressed to the server 20-1, while controlling the passage of the malicious packet relayed from the repeater 30-2 based on the attack information.

[Processing at the time of detecting illegal packet (first embodiment)] The operation at the time of detecting the illegal packet by the defense device 10 is explained with reference to Fig. 7. Fig. 7 is a flowchart of a process procedure at the time of detecting the illegal packet.

As shown in Fig. 7, upon detection of the illegal traffic based on the illegal traffic condition shown in Fig. 5 (step S11), the attack detection module 17 in the defense device 10 generates an illegal signature (step S12). The attack detection module 17 registers the generated illegal signature in the packet controller 12 (filtering unit) (step S13).

[Processing at the time of controlling packet (first embodiment)] The operation at the time of controlling the packet by the defense device 10 is explained with reference to Fig. 8. Fig. 8 is a flowchart of a process procedure at the time of controlling the packet.

As shown in Fig. 8, when the packet is input from the network interface 11 (step S21, Yes), the packet controller 12 (filtering unit) determines whether the packet matches the registered illegal signature (step S22). When the packet matches the illegal signature (step S22, Yes), the packet controller 12 inputs the packet into an illegal queue for processing illegal packets (step S23).

On the contrary, when the packet does not match the illegal signature (step S22, No), the packet controller 12 determines whether the input packet matches the registered normal signature (step S24). When the packet matches the normal signature (step S24, Yes), the packet controller 12 inputs the packet into a normal queue for normal users (step S25).

If the packet does not match the normal signature either (step S24, No), the packet controller 12 determines whether the input packet matches the registered suspicious signature (step S26). When the packet matches the suspicious signature (step S26, Yes), the packet controller 12 inputs the packet into a suspicious queue for suspicious users (step S27). On the contrary, if the packet does not match the suspicious signature (step S26, No), the packet controller 12 inputs the packet into the normal queue (step S28).

The packet controller 12 outputs the packet in the normal queue from the network interface 11 without limiting the transmission band, or outputs the packet in the suspicious queue or the illegal queue by limiting the transmission band according to a transmission band limiting value indicated by the respective signatures. The respective signatures of the illegal signature, the normal signature, and the suspicious signature can be registered in a plurality of numbers in the packet controller 12 (filtering unit). When the detection attribute or the like of the registered signature satisfies a predetermined determination standard, the packet controller 12 releases the signature satisfying the predetermined determination standard, to terminate the processing for controlling the passage of the packet based on the released signature.

[Effects of the first embodiment] According to the first embodiment, the repeater 30, which becomes the notification destination of the route information for routing the malicious packet through the own device is selected, taking the inflow direction of the malicious packet into consideration, to control the passage of the malicious packet routed from the selected repeater 30 to the own device. Accordingly, defense against the malicious packet can be realized, without being affected by the inflow direction of the malicious packet.

According to the first embodiment, the route information is notified to the other repeater 30-2, excluding the repeater 30-1 as the next relay destination with respect to the attacked server 20-1 (or domain), and the packet routed from the repeater 30-2 to the own device is relayed to the repeater 30-2. Accordingly, generation of the packet loop can be prevented.

### Second Embodiment

The outline and characteristics of a network-attack defense system that prevents an attack by a plurality of defense devices is explained in a second embodiment, followed by the configuration, processing of a defense device, and effect of the second embodiment.

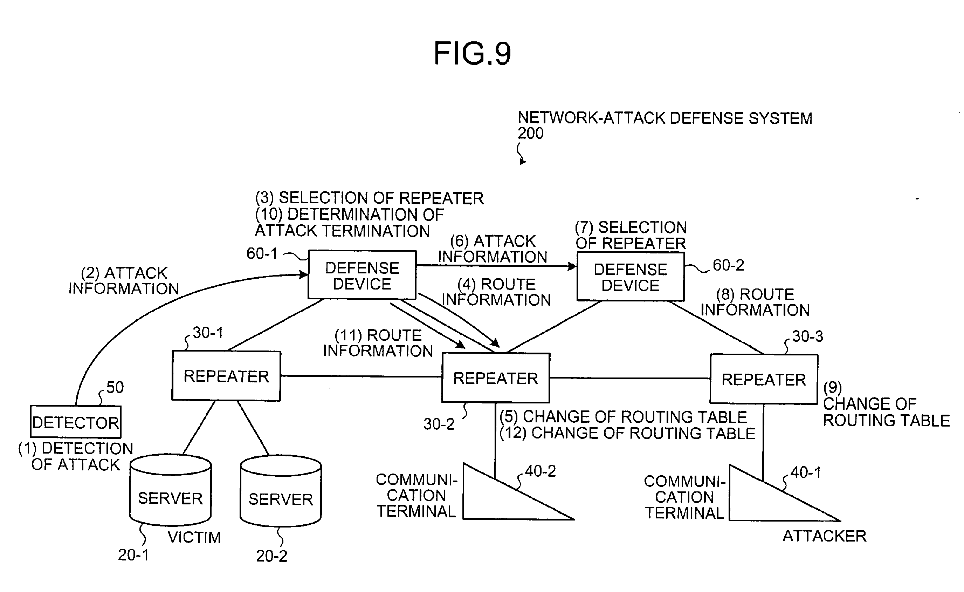

[Outline and characteristic of system (second embodiment)] The outline and the characteristics of the network-attack defense system according to the second embodiment are explained with reference to Fig. 9. Fig. 9 is a configuration diagram of the network-attack defense system according to the second embodiment.

As shown in Fig. 9, a network-attack defense system 200 includes, on the network, a defense device 60 that defends the server 20 on the network against an attack, when a DoS attack or a DDoS attack with respect to the server 20 is detected, and the repeaters 30 that relay a packet to be transmitted to the server 20. The server 20 and the communication terminal 40 are connected to the network, and the detector 50 that detect that the server 20 is under attack is provided on the network.

Among the elements constituting the network-attack defense system 200 according to the second embodiment, like reference numerals designate like parts as those of the network-attack defense system 100 according to the first embodiment, and the explanation thereof is omitted. In the explanation below, respective repeaters 30 are distinguished from each other as the repeater 30-1 and the repeater 30-2, and the respective servers 20 are distinguished from each other as the server 20-1 and the server 20-2. The respective defense devices 60 are distinguished from each other as a defense device 60-1 and a defense device 60-2, and the respective communication terminals 40 are distinguished from each other as a communication terminal 40-1 and a communication terminal 40-2.

In the network-attack defense system 200, a routing table specifying addresses of packets is registered in the defense device 60 and the repeaters 30. As a method for registering the routing table, for example, it can be registered in conformity with a known routing protocol such as OSPF, RIP, or BGP.

When the communication terminal 40-1 normally transmits a packet to the server 20-1, the transmitted packet is relayed to the server 20-1 via the repeaters 30-3, 30-2, and 30-1 without being relayed by the defense device 60 according to the respective routing tables of the repeaters 30-1, 30-2, and 30-3.

When the communication terminal 40-1 is an attacker, and a malicious packet for an attack is transmitted to the server 20-1, the detector 50 detects the attack to the server 20-1 and transmits attack information indicating detection of an attack to the defense device 60-1 (see (1) and (2) in Fig. 9). The defense device 60 can be connected to a controlling network for controlling the defense device 60 and the like, and the attack information can be transferred via the controlling network.

On the other hand, the defense device 60-1 having received the attack information transmitted from the detector 50 selects the repeater 30, which becomes the notification destination of route information for routing the malicious packet through the own device, based on the received attack information (see (3) in Fig. 9). Specifically, as according to the first embodiment, after having specified the attacked server 20-1 from the attack information, the defense device 60-1 determines the repeater 30-1, which becomes the next relay destination with respect to the packet addressed to the specified server 20-1, from the routing table, and selects the repeater 30-2, excluding the repeater 30-1, from the repeaters 30-1 and 30-2 adjacent to the defense device 60-1, as the notification destination.

After having selected the repeater 30, the defense device 60-1 notifies the selected repeater 30-2 of the route information for routing the malicious packet through the own device (see (4) in Fig. 9), and the repeater 30-2 changes the routing table based on the notified route information (see (5) in Fig. 9). As a result, the repeater 30-2 relays the malicious packet addressed to the server 20-1 to the defense device 60-1. That is, the malicious packet is relayed to the server 20-1 via the repeater 30-3, the repeater 30-2, the defense device 60-1, and the repeater 30-1. The defense device 60-1 relays the packet addressed to the server 20-1, while controlling the passage of the malicious packet relayed from the repeater 30-2 based on the attack information.

The routing table of the repeater 30-2 is changed in this manner, and the malicious packet is relayed from the repeater 30-2 to the defense device 60-1 and processed. The main feature of the defense device 60 in the network-attack defense system 200 according to the second embodiment lies in that the routing table is changed by selecting the predetermined repeater 30 based on the attack information, and also, the attack information is transmitted to another adjacent defense device 60.

That is, the defense device 60-1 notifies the repeater 30-2 of the route information, and then transmits the attack information to the defense device 60-2 adjacent to the defense device 60-1 (see (6) in Fig. 9). As a result, the defense device 60-2 having received the attack information also selects the repeater 30, which becomes the notification destination of the route information for routing the malicious packet through the own device based in the attack information as in the defense device 60-1 (see (7) in Fig. 9). Specifically, the defense device 60-2 specifies the attacked server 20-1 from the received attack information, determines the repeater 30-2 as the next relay destination with respect to the packet addressed to the specified server 20-1 from the routing table, and selects the repeater 30-3, excluding the repeater 30-2, from the repeaters 30-2 and 30-3 adjacent to the defense device 60-2.

After having selected the repeater 30, the defense device 60-2 notifies the selected repeater 30-3 of the route information for routing the malicious packet through the own device (see (8) in Fig. 9), and the repeater 30-3 changes the routing table based on the notified route information (see (9) in Fig. 9). As a result, the repeater 30-3 relays the malicious packet addressed to the server 20-1 to the defense device 60-2. That is, the malicious packet is relayed to the server 20-1 via the repeater 30-3, the defense device 60-2, the repeater 30-2, the defense device 60-1, and the repeater 30-1. The defense device 60-2 relays the packet addressed to the server 20-1, while controlling the passage of the relayed malicious packet based on the attack information.

Thus, the routing table of the repeater 30-3, which is closer to the attacker than the repeater 30-1, is changed, and the malicious packet is relayed from the repeater 30-3 to the defense device 60-2 and processed. The main feature of the defense device 60 in the network-attack defense system 200 according to the second embodiment lies in that the attack information is transmitted to another adjacent defense device 60, and also, relay of the packet to the own device by the repeater 30 that has changed the routing table is cancelled.

That is, the defense device 60-2 transmits the attack information to the other adjacent defense device 60, and determines whether transmission of the malicious packet to the own device has finished (see (10) in Fig. 9). Specifically, in the above example, when the malicious packet does not pass through the defense device 60-1 for a predetermined period of time due to the control of the passage of the malicious packet by the defense device 60-2, the defense device 60-1 determines that the attack from the communication terminal 40-1 has finished.

The defense device 60-1 then notifies the repeater 30-2 that has changed the routing table of the route information for not routing the packet addressed to the server 20-1 through the own device (see (11) in Fig. 9), and the repeater 30-2 changes the routing table based on the notified route information (see (12) in Fig. 9). As a result, the repeater 30-2 relays the malicious packet addressed to the server 20-1 not to the defense device 60-1 but to the repeater 30-1. That is, the malicious packet is relayed o the server 20-1 via the repeater 30-3, the defense device 60-2, the repeater 30-2, and the repeater 30-1.

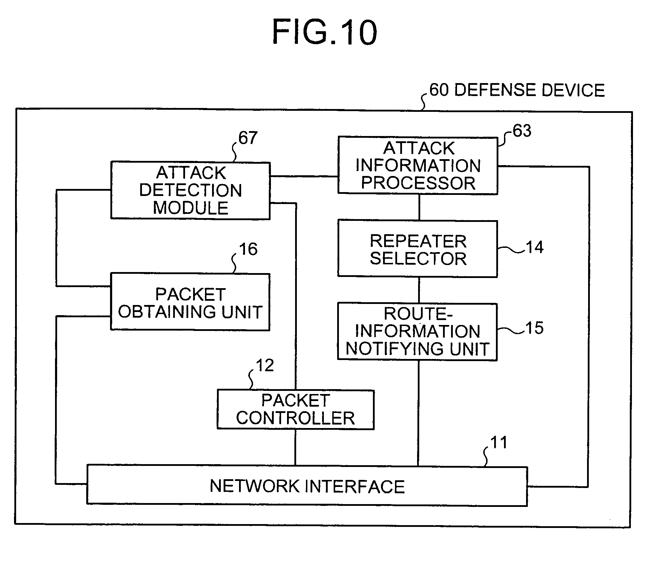

[Configuration of defense device (second embodiment)] The configuration of the defense device 60 shown in Fig. 9 is explained next with reference to Fig. 10. Fig. 10 is a block diagram of the configuration of the defense device 60 according to the second embodiment. As shown in Fig. 10, the defense device 60 includes the network interface 11, the packet controller 12, an attack information processor 63, the repeater selector 14, the route-information notifying unit 15, the packet obtaining unit 16, and an attack detection module 67.

The packet controller 12 corresponds to a "packet control unit" in the claims, the attack information processor 63 corresponds to an "attack information transmitter", the repeater selector 14 corresponds to a "repeater selecting unit", the route-information notifying unit 15 corresponds to a "route-information notifying unit", and the attack detection module 67 corresponds to an "attack-termination determining unit". Among the elements constituting the defense device 60 according to the second embodiment, like reference numerals designate parts as those of the defense device 10 according to the first embodiment, and the explanation thereof is omitted.

In Fig. 10, when the detector 50 detects a DoS attack or a DDoS attack, the attack information processor 63 receives the attack information indicating detection of an attack, and also transmits the received attack information to a defense device adjacent to the own defense device 60. However, the attack information processor 63 does not transmit the attack information to the adjacent relay device, which has transmitted the attack information to the own defense device 60. For example, in the network-attack defense system 200 shown in Fig. 9, if the defense device 60-1 has transmitted the attack information to the defense device 60-2, the attack information processor 63 in the defense device 60-2 does not transmit the attack information again to the defense device 60-1, which is the adjacent relay device having transmitted the attack information.

The attack detection module 67 determines whether the attack has finished, in addition to performing detection and analysis of the attack and generating the normal signature and the illegal signature, based on the statistical information provided by the packet obtaining unit 16 and the attack information provided by the attack information processor 13. Specifically, after having transmitted the attack information to another adjacent defense device 60, the attack detection module 67 determines whether transmission of the malicious packet to the own device has finished. In the example shown in Fig. 9, when the malicious packet does not pass through the defense device 60-1 for a predetermined period of time due to the control of the passage of the malicious packet by the defense device 60-2, the attack detection module 67 of the defense device 60-1 determines that the attack from the communication terminal 40-1 has finished.

The route-information notifying unit 15 notifies the repeater 30 selected by the repeater selector 14 of the route information for routing the packet to be transmitted to the victim/target via the own defense device. Further, when the attack detection module 67 determines that the attack has finished, the route-information notifying unit 15 notifies the repeater 30 selected by the repeater selector 14 of the route information for not routing the packet to be transmitted to the victim/target through the own defense device.

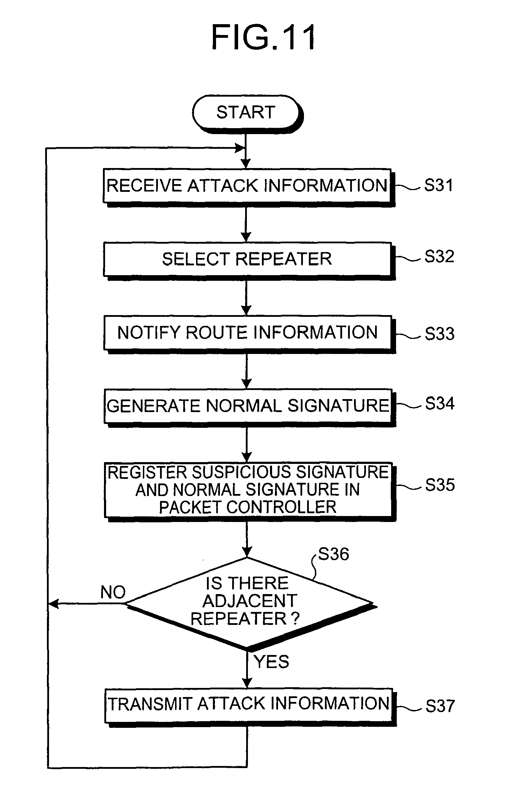

[Processing at the time of receiving attack information (second embodiment)] The operation at the time of receiving the attack information by the defense device 60 is explained with reference to Fig. 11. Fig. 11 is a flowchart of a process procedure at the time of receiving the attack information.

As shown in Fig. 11, when the attack information processor 63 in the defense device 60 receives the attack information transmitted from the detector 50 or the attack information transmitted from another adjacent defense device 60 (step S31), the repeater selector 14 selects at least one repeater 30 as the notification destination of the route information for routing the malicious packet through the own device, based on the received attack information (step S32).

Specifically, in the example shown in Fig. 9, when the defense device 60-1 receives the attack information from the detector 50, the repeater selector 14 specifies the attacked server 20-1 based on the attack information, determines the repeater 30-1 as the next relay destination with respect to the packet addressed to the specified server 20-1 from the routing table, and selects the repeater 30-2 as the notification destination, excluding the repeater 30-1 from the repeaters 30-1 and 30-2 adjacent to the defense device 60-1.

On the other hand, when the defense device 60-2 receives the attack information from the defense device 60-1, the repeater selector 14 specifies the attacked server 20-1 based on the attack information, determines the repeater 30-2 as the next relay destination with respect to the packet addressed to the specified server 20-1 from the routing table, and selects the repeater 30-3 as the notification destination, excluding the repeater 30-2 from the repeaters 30-2 and 30-3 adjacent to the defense device 60-2.

Thereafter, the route-information notifying unit 15 in the defense device 60 notifies the repeater 30 selected by the repeater selector 14 at step S32 of the route information for routing the packet to be transmitted to the victim/target, through the defense device (step S33). Specifically, in this example, the defense device 60-1 transmits to the repeater 30-2 the route information for routing the packet to be transmitted to the server 20-1 through the defense device 60-1, and the defense device 60-2 transmits to the repeater 30-3 the route information for routing the packet to be transmitted to the server 20-1 through the defense device 60-2.

The attack detection module 67 in the defense device 60 generates the normal signature based on the suspicious signature and the normal condition information included in the attack information (step S34), and registers the suspicious signature included in the attack information and the normal signature generated at step S34 in the packet controller 12 (filtering unit) (step S35).

The attack information processor 63 in the defense device 60 determines the presence of the defense device 60 adjacent to the own device (step S36). When there is the adjacent defense device 60 (step S36, Yes), the attack information processor 63 transmits the attack information received at step S31 to the adjacent defense device (step S37). Specifically, in the above example, since there is the adjacent defense device 60-2, the defense device 60-1 transmits the attack information to the defense device 60-2. However, the defense device 60-2 does not transmit the attack information because there is no adjacent defense device 60.

The repeaters 30-2 and 30-3 having received the route information according to the processing at step S33 change the routing table based on the notified route information. As a result, the repeater 30-2 relays the malicious packet addressed to the server 20-1 to the defense device 60-1, and the repeater 30-3 relays the malicious packet addressed to the server 20-1 to the defense device 60-2. The defense devices 60-1 and 60-2 relay the packet addressed to the server 20-1, while controlling the passage of the malicious packet relayed from the repeaters 30-2 and 30-3, based on the attack information.

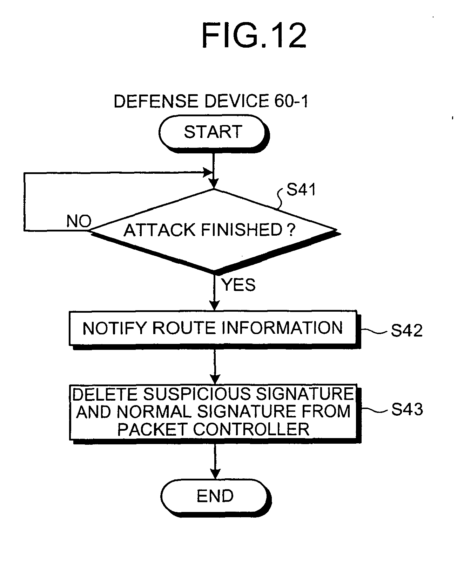

[Determination processing of attack termination (second embodiment)] The determination operation of attack termination performed by the defense device 60 is explained with reference to Fig. 12. Fig. 12 is a flowchart of a process procedure of determining attack termination.

As shown in Fig. 2, the attack detection module 67 in the defense device 60 determines whether transmission of the malicious packet to the own device has finished (step S41). Specifically, in the example shown in Fig. 9, when the malicious packet does not pass through the defense device 60-1 for a predetermined period of time due to the control of the passage of the malicious packet by the defense device 60-2, the attack detection module 67 in the defense device 60-1 determines that the attack from the communication terminal 40-1 has finished.

The route-information notifying unit 15 in the defense device 60 notifies the repeater 30 selected at step S32 in Fig. 11 of the route information for routing the packet to be transmitted to the victim/target through the own device (step S42). Specifically, in the example shown in Fig. 9, the defense device 60-1 notifies the repeater 30-2 having changed the routing table before of the route information for not routing the packet addressed to the server 20-1 through the own device.

The packet controller 12 (filtering unit) releases the registered suspicious signature, the normal signature, and the like, to terminate the processing for controlling the passage of the packet based on the released signature (step S43). That is, the packet controller 12 deletes suspicious signature, the normal signature, and the like registered for controlling the malicious packet addressed to the server 20-1.

The repeater 30-2 having received the route information according to the processing at step S42 changes the routing table based on the notified route information. As a result, the repeater 30-2 relays the malicious packet addressed to the server 20-1 not to the defense device 60-1 but to the repeater 30-1. Therefore, the malicious packet transmitted from the communication terminal 40-1 is relayed to the server 20-1 via the repeater 30-3, the defense device 60-2, the repeater 30-2, and the repeater 30-1.

It is desirable that the operation at step S41 shown in Fig. 12 is started at an optional point in time after the route information for routing the malicious packet through the defense device 60 is notified to the repeater 30, for example, after step S33 shown in Fig. 11.

[Effects of the second embodiment] According to the second embodiment, the defense device 60 transmits the attack information to another defense device 60 adjacent to the own device (defense device 60). Further, even when having received the attack information from another defense device 60, the defense device 60 selects the repeater 30, which becomes the notification destination of the route information for routing the malicious packet through the own device, based on the attack information, to control the passage of the malicious packet routed from the selected repeater 30 to the own device. Accordingly, the attack can be prevented by the defense device close to the attack source.

According to the second embodiment, when transmission of the malicious packet routed from the repeater 30 to the own device has finished, the route information for not routing the malicious packet through the own device is notified again to the repeater 30. Accordingly, detour of the malicious packet through the defense device 60 can be efficiently changed over.

### Third Embodiment

While the embodiments of the present invention have been explained, the present invention can be executed in various different embodiments other than the embodiments explained above. The various different embodiments are explained as a network-attack defense system according to a third embodiment.

For example, in the above embodiments, while an example in which one repeater 30 is selected from a plurality of repeaters 30 adjacent to the defense device 10 (or 60) has been explained, the present invention is not limited thereto. For example, when a plurality of repeaters 30 are connected to the repeater 30, which becomes the next relay destination with respect to the attacked server 20, the repeaters 30 can be selected as the notification destination of the route information.

The respective constituents of the devices (for example, the defense devices 10 and 60 shown in Figs. 2 and 10) illustrated in the embodiments are functionally conceptual, and the physically same configuration is not always necessary. In other words, the specific mode of dispersion and integration of the defense devices 10 and 60 is not limited to the illustrated one, and all or a part of the defense devices 10 and 60 can be functionally or physically dispersed or integrated in an optional unit, according to the various kinds of load and the status of use. All or an optional part of the various processes functions performed by the defense devices 10 and 60 can be realized by the CPU or a program analyzed and executed by the CPU, or can be realized as hardware by the wired logic.

Of the respective processing explained in the embodiments, all or a part of the processing explained as being performed automatically can be performed manually, or all or a part of the processing explained as being performed manually can be performed automatically in a known method. The information including the process procedure, the control procedure, specific names, and various kinds of data and parameters shown in the data or in the drawing (for example, the suspicious signature shown in Fig. 3, the normal condition information shown in Fig. 4, the illegal traffic condition shown in Fig. 5) can be optionally changed, unless otherwise specified.

In the above embodiments, while an example in which the packet is detoured by using signatures classified into three types, that is, an illegal signature, a normal signature, and a suspicious signature, has been explained, the present invention is not limited thereto. For example, the packet can be detoured by using a single signature, or using signatures classified into a plurality of types other than the above three types. Further, the signature itself may not be used, and for example, the packet can be detoured by using instruction information instructing the detour.

In the above embodiments, while respective devices (for example, the defense devices 10 and 60) realizing the present invention are explained in view of functions, the respective functions of the respective devices can be realized by executing a program by a computer such as a personal computer and a workstation. That is, the various process procedures explained in the first and the second embodiments can be realized by executing programs prepared in advance on a computer. These programs can be distributed via a network such as the Internet. These programs can be recorded on a computer readable recording medium such as a hard disk, a flexible disk (FD), a CD-ROM, an MO, and a DVD, and executed by reading the programs from the recording medium by the computer. As an example, CD-ROMs storing the program for the defense device such as the one according to the first embodiment can be distributed, so that respective computers read the program stored in the CD-ROMs to execute the program.

### INDUSTRIAL APPLICABILITY

The defense device, the defense method, the defense program, and the network-attack defense system according to the present invention are useful when route information is transmitted to a repeater that relays a malicious packet addressed to a server or a domain on a network to control the passage of the malicious packet, and particularly, suitable for preventing the malicious packet without being affected by an inflow direction of the malicious packet.

## Claims

1. A defense device that controls, based on information on an attack against a server or a domain, a passage of a malicious packet addressed to the server or the domain on a network by transmitting route information to a repeater that relays the malicious packet, the defense device comprising:
a repeater selecting unit that selects at least one repeater that becomes a notification destination of the route information for routing the malicious packet through the defense device, from among a plurality of repeaters adjacent to the defense device, based on the information on the attack;
a route-information notifying unit that notifies the route information for routing the malicious packet through the defense device to the repeater by the repeater selecting unit; and
a packet control unit that controls the passage of the malicious packet routed to the defense device from the repeater to which the route information has been notified by the route-information notifying unit.

2. The defense device according to claim 1, wherein
the repeater selecting unit selects the repeater as the notification destination of the route information, excluding the repeater that becomes a next relay destination with respect to the server or the domain attacked by the malicious packet, from among the repeaters adjacent to the defense device.

3. The defense device according to claim 1 or 2, further comprising:
an attack information transmitter that transmits the information on the attack to other defense device adjacent to the defense device, wherein
the repeater selecting unit also selects, when the information on the attack is received from the other defense device, at least one repeater that becomes the notification destination of the route information for routing the malicious packet through the defense device, based on the information on the attack.

4. The defense device according to claim 1, further comprising:
an attack-termination determining unit that monitors the malicious packet routed to the defense device from the repeater to which the route information has been notified by the route-information notifying unit, and determines whether a transmission of the malicious packet routed from the repeater to the defense device has terminated, wherein
when the attack-termination determining unit determines that the transmission of the malicious packet has terminated, the route-information notifying unit notifies route information for not routing the malicious packet through the defense device to the repeater.

5. A network-attack defense system comprising:
a plurality of repeaters that relays a packet transmitted to a server or a domain on a network; and
a defense device that controls, based on information on an attack against the server or the domain, a passage of a malicious packet addressed to the server or the domain on a network by transmitting route information to a repeater that relays the malicious packet, wherein
the defense device includes
a repeater selecting unit that selects at least one repeater that becomes a notification destination of the route information for routing the malicious packet through the defense device, from among a plurality of repeaters adjacent to the defense device, based on the information on the attack;
a route-information notifying unit that notifies the route information for routing the malicious packet through the defense device to the repeater by the repeater selecting unit; and
a packet control unit that controls the passage of the malicious packet routed to the defense device from the repeater to which the route information has been notified by the route-information notifying unit.

6. A defense method using a defense device that controls, based on information on an attack against a server or a domain, a passage of a malicious packet addressed to the server or the domain on a network by transmitting route information to a repeater that relays the malicious packet, the defense method comprising:
selecting at least one repeater that becomes a notification destination of the route information for routing the malicious packet through the defense device, from among a plurality of repeaters adjacent to the defense device, based on the information on the attack;
notifying the route information for routing the malicious packet through the defense device to the repeater at the selecting; and
controlling the passage of the malicious packet routed to the defense device from the repeater to which the route information has been notified at the notifying.

7. The defense method according to claim 6, wherein
the selecting includes selecting the repeater as the notification destination of the route information, excluding the repeater that becomes a next relay destination with respect to the server or the domain attacked by the malicious packet, from among the repeaters adjacent to the defense device.

8. The defense method according to claim 6 or 7, further comprising:
transmitting the information on the attack to other defense device adjacent to the defense device, wherein
the selecting includes also selecting, when the information on the attack is received from the other defense device, at least one repeater that becomes the notification destination of the route information for routing the malicious packet through the defense device, based on the information on the attack.

9. The defense method according to claim 6, further comprising:
monitoring the malicious packet routed to the defense device from the repeater to which the route information has been notified at the notifying; and
determining whether a transmission of the malicious packet routed from the repeater to the defense device has terminated, wherein
when it is determined that the transmission of the malicious packet has terminated, the notifying includes notifying route information for not routing the malicious packet through the defense device to the repeater.

10. A defense program for realizing a defense method using a defense device that controls, based on information on an attack against a server or a domain, a passage of a malicious packet addressed to the server or the domain on a network by transmitting route information to a repeater that relays the malicious packet, the defense program causing a computer to execute as the defense device:
selecting at least one repeater that becomes a notification destination of the route information for routing the malicious packet through the defense device, from among a plurality of repeaters adjacent to the defense device, based on the information on the attack;
notifying the route information for routing the malicious packet through the defense device to the repeater at the selecting; and
controlling the passage of the malicious packet routed to the defense device from the repeater to which the route information has been notified at the notifying.

11. The defense program according to claim 10, wherein
the selecting includes selecting the repeater as the notification destination of the route information, excluding the repeater that becomes a next relay destination with respect to the server or the domain attacked by the malicious packet, from among the repeaters adjacent to the defense device.

12. The defense program according to claim 10 or 11, further causing the computer to execute:
transmitting the information on the attack to other defense device adjacent to the defense device, wherein
the selecting includes also selecting, when the information on the attack is received from the other defense device, at least one repeater that becomes the notification destination of the route information for routing the malicious packet through the defense device, based on the information on the attack.

13. The defense program according to claim 10, further causing the computer to execute:
monitoring the malicious packet routed to the defense device from the repeater to which the route information has been notified at the notifying; and
determining whether a transmission of the malicious packet routed from the repeater to the defense device has terminated, wherein
when it is determined that the transmission of the malicious packet has terminated, the notifying includes notifying route information for not routing the malicious packet through the defense device to the repeater.
